# EUROPEAN PATENT APPLICATION

(11) **EP 2 778 744 A1**
(43) Date of publication of application: **17.09.2014**
(21) Application number: 14158844.2
(22) Date of filing: 11.03.2014
(51) Int. Cl.: G02B 27/01, G02B 5/20

(54) **Head-up display device**

(30) Priority: 12.03.2013 JP 2013048588
(71) Applicant: Honda Motor Co., Ltd., Tokyo 107-8556 (JP)
(72) Inventor: Yuki, Masashi, Saitama, 351-0193 (JP); Hira, Masakazu, Saitama, 351-0193 (JP)
(74) Representative: Herzog, Markus

(57) **Abstract**

A head-up display device (12) includes a housing (18), an image light emitter (48) disposed in the housing (18) for emitting image light (202) representing an image, and a mirror (28) disposed in the housing (18) for reflecting the image light (202) in order to display the image light (202) as a virtual image (300) in a front visual field of the user (150) outside of the housing (18). A light-transmissive layer (50) is disposed in the housing (18) on a light path (200) of the image light (202). The light-transmissive layer (50) has a light transmittance that is progressively higher toward a center region thereof.

## Description

### BACKGROUND OF THE INVENTION

### Field of the Invention:

The present invention relates to a head-up display device.

### Description of the Related Art:

Japanese Laid-Open Patent Publication No. 2008-195123 (hereinafter referred to as "JP2008-195123A") has the object of providing a vehicular head-up display device, which is designed to enable display visibility with very high contrast and increased display quality (see Abstract and paragraph [0004]). According to JP2008-195123A, a masking area 2a, which covers the peripheral edge of a front windshield 7, is enlarged, so as to provide an enlarged masking area 2 that doubles as a reflecting area for a head-up display on the front windshield 7 (see Abstract). An instrument panel 3 includes a dented upper surface having a recess 3a in positional alignment with the enlarged masking area 2, thereby further increasing the enlarged masking area 2 in order to provide a vertically striped pattern 21, which resides outside of the display range of the head-up display on the enlarged masking area 2, i.e., which is provided separately from a virtual image display 20. The vertically striped pattern 21 provides a design, which blends into a background image that is displayed in the enlarged masking area 2 (see Abstract).

The enlarged masking area 2, which includes the vertically striped pattern 21, is arranged as a dark ceramic paint portion, for example (see paragraph [0012]). Since the background of the display of a reflected virtual image is always dark regardless of the peripheral scene, the head-up display device provides display visibility with a very high contrast, without being affected by the peripheral environment (see paragraph [0017]). Further, since the reflected virtual image is displayed in a display range against the dark background, the head-up display device is capable of displaying the image with good visibility irrespective of a low brightness level within a display area 12, compared with a display device type in which reflected images are displayed in a substantially transparent range (see paragraph [0017]).

Furthermore, according to JP2008-195123A, due to the presence of the vertically striped pattern 21, when an image is displayed, an area where glimmering light is emitted in the background is displayed naturally and inconspicuously (see paragraph [0020]).

### SUMMARY OF THE INVENTION

As described above, the enlarged masking area 2, which includes the vertically striped pattern 21 therein, is provided by black ceramic paint, for example (see paragraph [0012]). The vertically striped pattern 21 in the form of a black ceramic paint is visually recognizable by the user, irrespective of whether or not the virtual image display 20 is generated. Since the user sees the vertically striped pattern 21 even if the virtual image display 20 is not generated, the vertically striped pattern 21 tends to make the head-up display device unattractive to look at, and thus the merchantability of the head-up display device is adversely affected.

An object of the present invention is to provide a head-up display device, which is of increased merchantable quality.

According to the present invention, there is provided a head-up display device comprising a housing, an image light emitter disposed in the housing for emitting image light representing an image, a mirror disposed in the housing for reflecting the image light to display the image light as a virtual image in a front visual field of a user outside of the housing, and a light-transmissive layer disposed on a light path of the image light in the housing, wherein the light-transmissive layer has a light transmittance that is progressively higher toward a center region thereof.

According to the present invention, as described above, the light-transmissive layer, with the light transmittance thereof progressively higher toward a center region, is disposed on the light path of the image light. The light-transmissive layer enables the contour or outer edge region of the virtual image to be blurred or obscured. In addition, the light-transmissive layer is disposed in the housing. If the virtual image is not displayed, a pattern, for example, the pattern disclosed in JP2008-195123A, does not remain visible. Accordingly, the head-up display device has an improved appearance and the merchantability of the head-up display device is increased.

The mirror may comprise a concave mirror, which is movable angularly with respect to the light path. In addition, the light-transmissive layer may be disposed more closely to the image light emitter than the concave mirror. When the concave mirror is moved angularly in order to move the displayed position of the virtual image, the positional relationship between the image light and the light-transmissive layer is maintained. Consequently, if the angle of the concave mirror is changed, the gradation or the light distribution of the virtual image is preserved.

The light-transmissive layer may be disposed on an exit of the image light emitter from which the image light leaves the image light emitter, or may be disposed in the image light emitter. Therefore, the light-transmissive layer may be disposed with increased leeway. In addition, since the light-transmissive layer is relatively close in position to a light source in the image light emitter, the positional relationship between the image light (the virtual image) and the light-transmissive layer can be adjusted with ease. Furthermore, when plural head-up display devices are manufactured, it is possible to minimize variations in the positional relationship between the image light and the light-transmissive layer.

The light-transmissive layer may be disposed on the mirror. Therefore, the light-transmissive layer may be disposed with increased leeway. In addition, if the mirror, e.g., the concave mirror, is disposed displaceably on the light path, then it is possible to make positional misalignments between the virtual image and the light-transmissive layer smaller than if the light-transmissive layer were disposed solely on a light-transmissive cover.

The head-up display device may further include a light-transmissive cover disposed on an exit of the housing from which the image light is emitted outside of the housing, and the light-transmissive layer may include a printed layer disposed on the light-transmissive cover. Therefore, the light-transmissive layer may be disposed with increased leeway. In addition, the light transmittance of the light-transmissive layer can be adjusted with ease.

According to the present invention, there also is provided a head-up display device comprising an image light output unit for outputting image light representing an image for use as a virtual image, a light-permeable reflective member for reflecting the image light toward a user in order to display a virtual image in front of the user, and a light-permeable member through which the image light is transmitted, the light-permeable member being disposed on a light path interconnecting the image light output unit and the light-permeable reflective member. The light-permeable member has a light attenuator for attenuating a portion of the image light, which corresponds to an outer edge region of the virtual image, and the light attenuator has a light transmittance that is progressively lower toward an outer edge of the virtual image.

According to the present invention, the head-up display device includes the light attenuator, the light transmittance of which is progressively lower toward the outer edge of the virtual image. The light attenuator makes it possible to blur or obscure the contour or outer edge region of the virtual image. The light-permeable member is disposed on a light path that interconnects the image light output unit and the light-permeable reflective member, i.e., the light-permeable member is disposed more closely to the image light output unit than the light-permeable reflective member. If the virtual image is not displayed, a pattern, for example, the pattern disclosed in JP2008-195123A, does not remain visible. Accordingly, the head-up display device has an improved appearance and hence the merchantability of the head-up display can be increased.

According to the present invention, it is possible to blur or obscure the contour or outer edge region of the virtual image. Further, if the virtual image is not displayed, the pattern does not remain visible around the position where the virtual image would otherwise be displayed. Accordingly, the head-up display device has an improved appearance and hence the merchantability of the head-up display can be increased.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a schematic view of a vehicle, which incorporates therein a head-up display device (hereinafter referred to as an "HUD device") according to an embodiment of the present invention;
FIG. 2 is an exploded perspective view of a head-up display unit (hereinafter referred to as an "HUD unit") of the HUD device;
FIG. 3 is a perspective view showing a light path in the HUD unit while the HUD unit is in use;
FIG. 4 is a perspective view of a printed sheet;
FIG. 5 is a view showing by way of example a virtual image displayed on a windshield and a surrounding area thereof; and
FIGS. 6A and 6B are (first and second) views showing the manner in which the displayed virtual image is positionally adjusted or displaced out of axial alignment on the windshield.

### DESCRIPTION OF THE PREFERRED EMBODIMENTS

### A. Embodiment

### 1. Description of Overall Arrangement

### [1-1. Overall Arrangement]

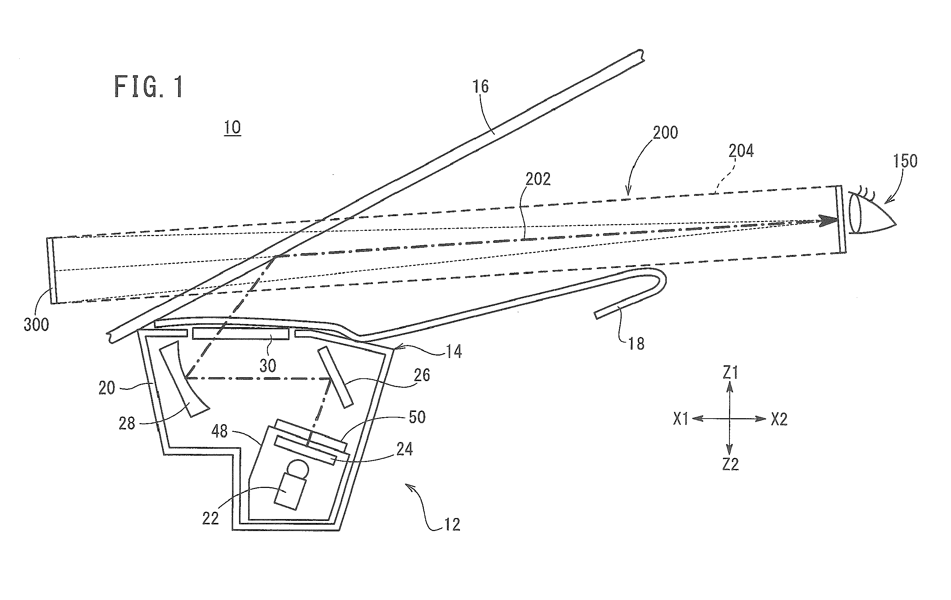

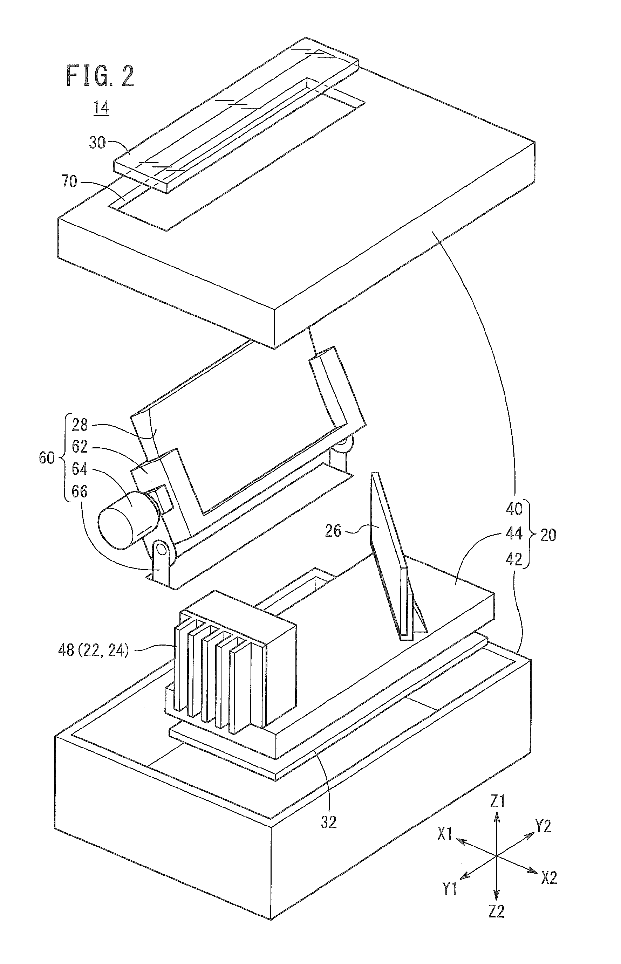

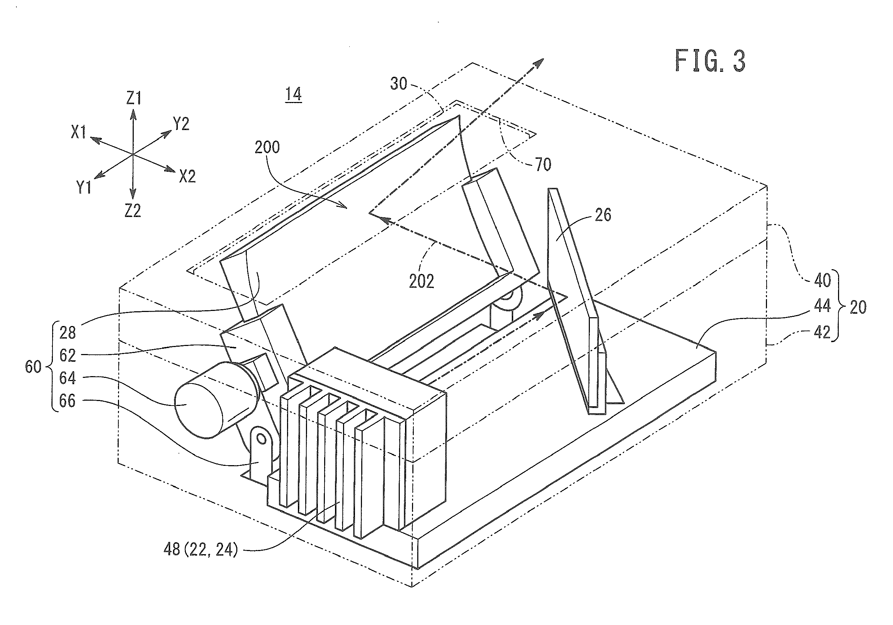

FIG. 1 schematically shows a vehicle 10, which incorporates therein a head-up display device 12 (hereinafter referred to as an "HUD device 12") according to an embodiment of the present invention. FIG. 2 shows an exploded perspective view of a head-up display unit 14 (hereinafter referred to as an "HUD unit 14") of the HUD device 12. FIG. 3 shows in perspective a light path 200 in the HUD unit 14 while the HUD unit 14 is in use.

As shown in FIG. 1, the HUD device 12 includes, in addition to the HUD unit 14, a colorless transparent windshield 16 (light-permeable reflective member, combiner) onto which a virtual image 300 is projected. The HUD unit 14 is disposed in an instrument panel 18 (housing). As shown in FIG. 1, the HUD unit 14 includes a casing 20, a light source 22, a display device 24, a plane mirror 26, a concave mirror 28, a light-transmissive cover 30, and a controller 32 (see FIG. 2).

As shown in FIG. 2, the casing 20 is made up of an upper member 40, a lower member 42, and an inner member 44. The light source 22, which emits visible light, comprises a cold cathode-ray tube, for example. The display device 24 serves to control transmission of visible light from the light source 22 through the display device 24. The display device 24 comprises a thin-film-transistor (TFT) liquid crystal display (LCD) device, for example. The display device 24 selectively turns on and off a plurality of pixels individually so as to control transmission of visible light from the light source 22 through the display device 24, thereby enabling the visible light to represent an image or image information. The visible light, which represents an image, will hereinafter be referred to as "image light 202".

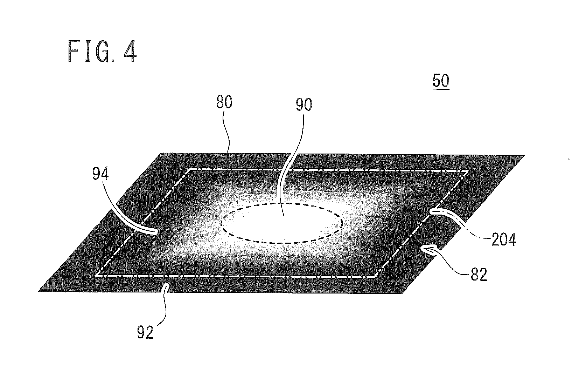

The light source 22 and the display device 24 are combined, thereby making up a light source unit 48 (image light emitter, image light output unit), which is fixedly mounted on the inner member 44 of the casing 20 (see FIGS. 2 and 3). The light source unit 48, i.e., the display device 24, emits the image light 202. The light source unit 48 has an exit (exit surface) from which the image light 202 leaves the light source unit 48. The exit lies on a portion of a light path 200 that is closer to the light source unit 48 than the concave mirror 28. A printed sheet 50 (see FIG. 1) for blurring or obscuring a contour of the virtual image 300 is applied to the exit of the light source unit 48. Details of the printed sheet 50 will be described later with reference to FIG. 4.

The plane mirror 26 serves to reflect the visible light (i.e., image light 202), which is emitted from the light source 22 and is transmitted through the display device 24, toward the concave mirror 28. The plane mirror 26 is fixedly mounted on the inner member 44 of the casing 20. The plane mirror 26 is provided in view of the layout of the light source unit 48, i.e., the light source 22 and the display device 24, and in view of the concave mirror 28, in order to guide the visible light from the light source unit 48 to the concave mirror 28. Depending on the layout of the light source unit 48 to the concave mirror 28, the plane mirror 26 may be dispensed with.

The concave mirror 28 reflects the image light 202 toward the windshield 16 (combiner), thereby displaying the image light 202 as a virtual image 300 in a front visual field of a user 150 (see FIG. 1). The concave mirror 28 serves as part of a concave mirror unit 60 (see FIGS. 2 and 3).

The concave mirror unit 60 includes, in addition to the concave mirror 28, a concave mirror holder 62 that supports the concave mirror 28, a step motor 64 (actuator) for adjusting the angle of the concave mirror 28 and the concave mirror holder 62, and a concave mirror plate 66 that supports the concave mirror 28, the concave mirror holder 62, and the step motor 64. The concave mirror unit 60 is fixedly mounted on the inner member 44 of the casing 20 by the concave mirror plate 66. The step motor 64 angularly moves the concave mirror 28 with respect to the light path 200.

The light-transmissive cover 30 allows the image light 202 from the concave mirror 28 to pass therethrough to the windshield 16, and also prevents dirt and dust from entering the casing 20. The light-transmissive cover 30 is disposed in an opening 70 defined in the upper member 40 of the casing 20, with the opening 70 being positioned in an exit area of the instrument panel 18. The light-transmissive cover 30 may be constructed as a lens.

The controller 32 controls the light source unit 48, i.e., the light source 22 and the display device 24, and the step motor 64, so as to control display of the virtual image 300.

### [1-2. Printed Sheet 50]

FIG. 4 shows the printed sheet 50 in perspective. As described above, according to the present embodiment, the printed sheet 50 is applied to the exit of the light source unit 48 from which the image light 202 leaves the light source unit 48 (see FIG. 1). As described later, however, the printed sheet 50 may be disposed in another position, which is closer to the windshield 16 than the exit of the light source unit 48, e.g., on the plane mirror 26, the concave mirror 28, or the light-transmissive cover 30.

The printed sheet 50 comprises a printed layer 82 applied to a colorless transparent film 80, which is made of polycarbonate, for example. As shown in FIG. 4, the transparent film 80 is of a rectangular shape. However, the transparent film 80 may be of another shape, e.g., a substantially rectangular shape with four rounded corners.

The printed layer 82 comprises a layer made of black ceramics. The printed layer 82 may be printed directly on the exit of the light source unit 48, without the transparent film 80 being interposed therebetween.

The printed sheet 50 is divided primarily into three regions. More specifically, as shown in FIG. 4, the printed sheet 50 includes a high-permeability region 90 located centrally in the printed sheet 50, a low-permeability region 92 located in an outer peripheral area of the printed sheet 50, and a medium-permeability region 94 (hereinafter also referred to as a "gradation region 94") located between the high-permeability region 90 and the low-permeability region 92. An elliptical broken line, as shown in FIG. 4, represents a boundary line (imaginary line) between the high-permeability region 90 and the medium-permeability region 94. A parallelogrammic dot-and-dash line, as shown in FIG. 4, represents a boundary line (imaginary line) between the low-permeability region 92 and the medium-permeability region 94. Among the regions 90, 92, 94, the printed layer 82 is positioned in the low-permeability region 92 and the medium-permeability region 94, but not in the high-permeability region 90.

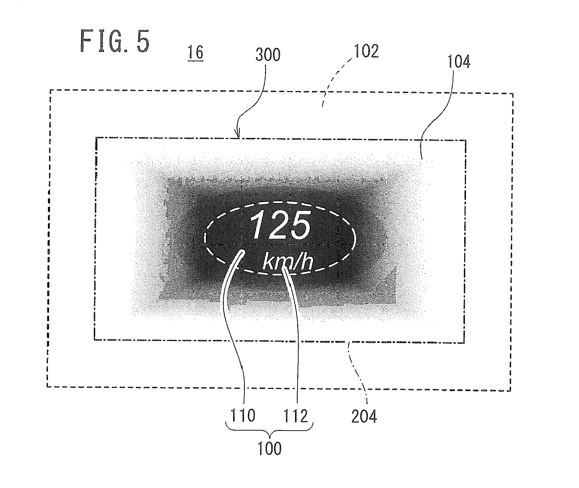

The high-permeability region 90 is a region corresponding to a portion of the virtual image 300 (see FIG. 5). The high-permeability region 90 has the highest light transmittance in the printed sheet 50. Although the high-permeability region 90 is illustrated as being of an elliptical shape, the high-permeability region 90 may be of another shape, such as a rectangular shape, a circular shape, or the like.

The low-permeability region 92 has the lowest light transmittance in the printed sheet 50, and the light transmittance thereof is uniform as a whole in the low-permeability region 92. According to the present embodiment, the low-permeability region 92 is produced as a uniform coating of black ceramics, for example. The low-permeability region 92 lies outside of an outer edge 204 (contour) of the light path 200. The outer edge 204 represents a set of outermost points of a range (design range) in which the image light 202 is displayed as the virtual image 300. When the outer edge 204 is viewed along a plane perpendicular to the direction in which the image light 202 travels, the outer edge 204 is observed as four straight lines that jointly make up a quadrangle (see FIGS. 4 and 5). Actually, a portion of the image light 202 may potentially protrude outside of the outer edge 204 but is masked by the low-permeability region 92. The low-permeability region 92 is of a rectangular or annular shape, but may be of another shape, e.g., a substantially elliptical and annular shape.

The medium-permeability region 94 is positioned inside of the outer edge 204 of the light path 200, and the light transmittance thereof is progressively lower from the high-permeability region 90 toward the low-permeability region 92. In other words, the amount (density) of black ceramics progressively increases from the high-permeability region 90 toward the low-permeability region 92. The light transmittance distribution of the medium-permeability region 94 gradually varies along the shape (elliptical shape according to the present embodiment) of the high-permeability region 90.

More specifically, within an area of the medium-permeability region 94, which extends along diagonal lines of the transparent film 80, the light transmittance of the medium-permeability region 94 is higher than surrounding areas and becomes progressively lower from the high-permeability region 90 toward the low-permeability region 92. An area of the medium-permeability region 94, which lies in the vicinity of the high-permeability region 90, is of an elliptical shape in the same manner as the high-permeability region 90, and the light transmittance thereof is uniform (see FIG. 5).

As a result, the light transmittance of the medium-permeability region 94 generally is progressively lower from the high-permeability region 90 toward the low-permeability region 92, and the medium-permeability region 94 has a light transmittance distribution in the vicinity of the high-permeability region 90, which is similar to or analogous with the light transmittance distribution of the high-permeability region 90. In addition, within the area of the medium-permeability region 94, which extends along the diagonal lines of the transparent film 80, the light transmittance of the medium-permeability region 94 is higher than the surrounding areas. The above light transmittance distribution of the medium-permeability region 94 makes it possible to improve the appearance of the virtual image 300 (see FIG. 5).

As described above, the printed sheet 50 includes the high-permeability region 90, the low-permeability region 92, and the medium-permeability region 94. Accordingly, the light transmittance of the printed sheet 50 is progressively higher toward a center region thereof.

### 2. Display of Virtual Image 300

### [2-1. Display of Virtual Image 300 Itself]

The virtual image 300, which is displayed using the printed sheet 50, and a surrounding area thereof will be described below.

### (2-1-1. Plural Regions Making up Virtual Image 300)

FIG. 5 shows by way of example the virtual image 300 that is displayed on the windshield 16 and a surrounding area thereof. FIG. 4 shows the printed sheet 50, whereas FIG. 5 shows the virtual image 300 displayed on the windshield 16 and the surrounding area thereof. It should be noted, therefore, that FIGS. 4 and 5 show opposite grayscale patterns. In FIG. 5, a white region, which appears outside of the virtual image 300, allows the user 150 to see an outside scene through the windshield 16.

As described above, the printed sheet 50 primarily includes the three regions, i.e., the high-permeability region 90, the low-permeability region 92, and the medium-permeability region 94 (gradation region 94). Accordingly, corresponding regions, i.e., a display region 100, a background region 102, and a blurred region 104 (hereinafter also referred to as a "gradation region 104") are formed on the windshield 16. The elliptical broken line shown in FIG. 5 represents a boundary line (imaginary line) between the display region 100 and the blurred region 104. The rectangular dot-and-dash line in FIG. 5 represents a boundary line (imaginary line) between the background region 102 and the blurred region 104. Among the regions 100, 102, 104, the virtual image 300 is displayed in the display region 100 and the blurred region 104, but is not displayed in the background region 102, as will be described in detail later.

### (2-1-2. Display Region 100)

The display region 100 corresponds to the high-permeability region 90 of the printed sheet 50. In the display region 100, image light 202 from the concave mirror 28 reaches the windshield 16 (combiner) without being reduced or attenuated in intensity by the printed layer 82. Therefore, the virtual image 300 can be displayed in a desired manner in the display region 100 without being adversely affected by the printed layer 82.

The virtual image 300 shown in FIG. 5 includes a background area 110, and an information display area 112, which represents information that actually is transmitted, e.g., characters indicating a speed in kilometers per hour, as illustrated. The background area 110 has a color (for example, a black color) with high contrast to the outside scene. The information display area 112 has a color that differs from the background area 110, in particular, a color such as white, yellow, or the like, with a marked contrast to the color of the background area 110.

### (2-1-3. Background Region 102)

The background region 102 corresponds to the low-permeability region 92 of the printed sheet 50. In the low-permeability region 92, the image light 202 from the concave mirror 28 is blocked. Therefore, the image light 202 from the concave mirror 28 does not reach the windshield 16. Accordingly, in the background region 102 of the windshield 16, the user can directly see the exterior scene through the windshield 16. Stated otherwise, the user can see the same exterior scene in the background region 102 and in the region outside of the background region 102.

### (2-1-4. Blurred Region 104)

The blurred region 104 corresponds to the medium-permeability region 94 of the printed sheet 50. In the medium-permeability region 94, the image light 202 from the concave mirror 28 reaches the windshield 16, while at the same time the image light 202 is reduced or attenuated in intensity by the printed layer 82. Therefore, the amount of image light 202 from the concave mirror 28 that reaches the windshield 16 in the blurred region 104 is smaller than the amount of image light 202 that reaches the windshield 16 in the display region 100, and greater than the amount of image light 202 that reaches the windshield 16 in the background region 102. As a consequence, the virtual image 300 is displayed in the blurred region 104 at a brightness or lightness level that is lower than in the display region 100.

According to the present embodiment, the image displayed in the blurred region 104 has the same color as the color of the background area 110 of the image displayed in the display region 100. Therefore, from the background area 110 of the display region 100 into the blurred region 104, the background becomes progressively blurred or obscured. The image displayed in the blurred region 104 may have a color, a brightness, or lightness level thereof that differs from that of the background area 110. For example, the displayed image may have a color with a brightness or lightness level that is higher than that of the background area 110.

### [2-2. Adjustment of the Display Position of the Virtual Image 300]

According to the present embodiment, as described above, the angle of the concave mirror 28 can be adjusted by the step motor 64 of the concave mirror unit 60 in order to change the position of the virtual image 300. One or more of the casing 20, the light source 22, the display device 24, the plane mirror 26, the concave mirror 28, and the light-transmissive cover 30 may possibly be displaced from a designed reference position, which tends to bring the virtual image 300 out of axial alignment on the windshield 16.

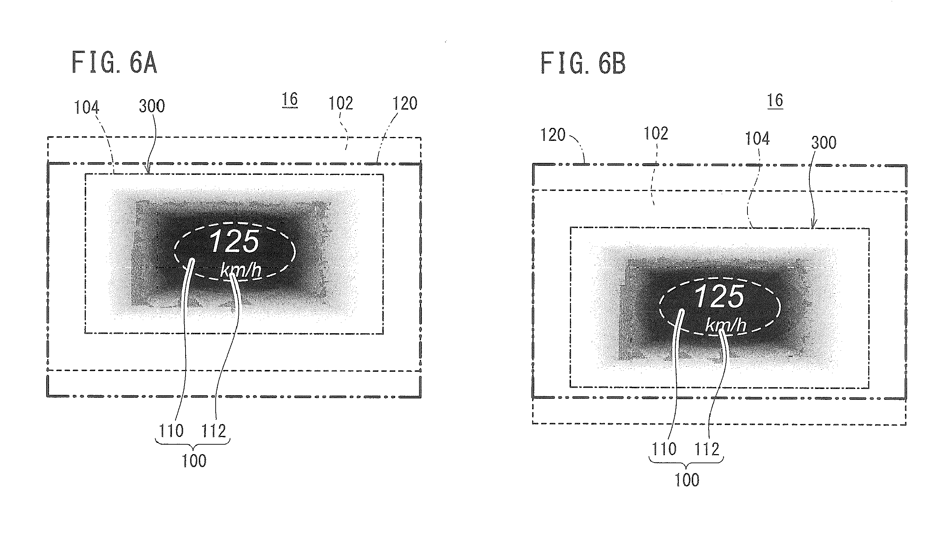

FIGS. 6A and 6B are (first and second) views showing the manner in which the displayed virtual image 300 is positionally adjusted or displaced out of axial alignment on the windshield 16. In FIGS. 6A and 6B, a region 120 surrounded by the two-dot-and-dash line (hereinafter referred to as a "display control region 120") refers to a region, which is used by the controller 32 as a range in which the virtual image 300 can move.

When the controller 32 controls the step motor 64 in order to angularly move the concave mirror 28, the position of the virtual image 300 varies vertically, as shown in FIGS. 6A and 6B. According to the present embodiment, the printed sheet 50 is applied to the exit of the light source unit 48 from which the image light 202 leaves the light source unit 48. The exit lies on a portion of the light path 200, which is closer to the light source unit 48 than the concave mirror 28. More specifically, the exit lies on a straight portion of the light path 200, which extends from the light source 22 or the display device 24. Consequently, even if the position of the virtual image 300 varies, the blurred region 104 on the windshield 16 follows the display region 100.

### 3. Advantages of the Present Embodiment

According to the present embodiment, as described above, the printed sheet 50 (light-transmissive layer), the light transmittance of which is progressively higher toward a center region thereof, is disposed in the light path 200 of the image light 202 from the light source unit 48. The printed sheet 50 makes it possible to blur or obscure the contour or the outer edge region of the virtual image 300. The printed sheet 50 is disposed in the instrument panel 18 (housing) (see FIG. 1). If the virtual image 300 is not displayed, a pattern, for example, the vertically striped pattern 21 disclosed in JP2008-195123A, does not remain visible in the surrounding area of the virtual image 300. Accordingly, the head-up display device 12 has an improved appearance and hence the merchantability of the head-up display device 12 can be increased.

Stated otherwise, according to the present embodiment, the head-up display device 12 includes the printed layer 82 (light attenuator), the light transmittance of which is progressively lowered toward the outer edge of the virtual image 300, for thereby blurring or obscuring the contour or the outer edge region of the virtual image 300. The printed sheet 50 (light-permeable member) is disposed on the light path 200 interconnecting the light source unit 48 (image light output unit) and the windshield 16 (light-permeable reflective member), i.e., at a position closer to the light source unit 48 than the windshield 16. Therefore, when the virtual image 300 is not displayed, a pattern, for example, the vertically striped pattern 21 disclosed in JP2008-195123A, does not remain visible in the surrounding area of the virtual image 300. Accordingly, the head-up display device 12 has an improved appearance and hence the merchantability of the head-up display device 12 can be increased.

According to the present embodiment, the printed sheet 50 (light-transmissive layer) is applied to the exit of the light source unit 48 (image light emitter) from which the image light 202 leaves the light source unit 48 (see FIG. 1). Therefore, the printed sheet 50 can be positioned with increased leeway. In addition, the printed sheet 50 is relatively close in position to the light source 22,
thereby making it easier to adjust the positional relationship between the image light 202 (the virtual image 300) and the printed sheet 50 than if the printed sheet 50 were applied to the light-transmissive cover 30. Furthermore, if a plurality of HUD devices 12 are manufactured, it is possible to minimize variations in the positional relationship between the image light 202 and the printed sheet 50.

### B. Modifications

The present invention is not limited to the above embodiment, but various alternative arrangements may be employed based on the disclosure of the present description. For example, the present invention may employ the following arrangements.

### 1. Object to which the Present Invention is Applicable

In the above embodiment, the HUD device 12 is applied to a vehicle 10. However, the HUD device 12 may be used on other objects, e.g., mobile objects such as aircraft, ships, or the like. The HUD device 12 may also be applied to robots, fabrication apparatus, or to home electric appliances in which the HUD unit 14 is not necessarily disposed in an instrument panel 18 (housing).

### 2. HUD Device 12

### [2-1. Overall Arrangement]

In the above embodiment, the HUD device 12 is of a type that projects images onto the windshield 16, i.e., a windshield projecting type. However, the HUD device 12 may be used in combination with other light-transmissive reflective members (combiners).

In the above embodiment, the HUD device 12 (the HUD unit 14) includes the light source unit 48 (the light source 22 and the display device 24), the plane mirror 26, the concave mirror 28, and the light-transmissive cover 30. However, the HUD device 12 is not limited to the illustrated structure, insofar as the printed sheet 50 (the light-transmissive layer, the light-permeable member) is disposed in a position that is closer to the light source unit 48 than the windshield 16 (combiner). For example, any one of the plane mirror 26, the concave mirror 28, and the light-transmissive cover 30 may be dispensed with.

### [2-2. Printed Sheet 50 (Light-Transmissive Layer, Light-Permeable Member)]

In the above embodiment, the printed sheet 50 is applied to the exit of the light source unit 48 from which the image light 202 leaves the light source unit 48 (see FIG. 1). However, the printed sheet 50 is not limited to the illustrated position, insofar as the printed sheet 50 is disposed between the windshield 16 (combiner) and the light source 22.

For example, the printed sheet 50 may be applied to the plane mirror 26, the concave mirror 28, or the light-transmissive cover 30. Alternatively, the printed sheet 50 may be disposed in the light source unit 48 (the light source 22 or the display device 24). Such alternatives allow the printed sheet 50 or the printed layer 82 to be positioned with increased leeway.

If the printed sheet 50 is applied to the plane mirror 26 or the concave mirror 28, or is disposed in the light source unit 48, then even if the angle of the concave mirror 28 is varied by the step motor 64, it is possible to preserve the positional relationship between the image light 202 and the printed sheet 50, or the positional relationship between the display region 100 and the blurred region 104. If the printed sheet 50 is applied to the light-transmissive cover 30, then since the light-transmissive cover 30 is disposed in a relatively outer area in the casing 20, the light transmittance of the printed sheet 50 can be adjusted with ease.

In the above embodiment, the printed layer 82 is placed in position using the printed sheet 50. However, the printed layer 82 may be placed in position in other ways. For example, the printed layer 82 may be printed directly or may be formed on an object such as the light source unit 48, the plane mirror 26, the concave mirror 28, or the light-transmissive cover 30, without using the transparent film 80.

In the above embodiment, the printed layer 82 (the low-permeability region 92 and the medium-permeability region 94) is made of black ceramics. However, the printed layer 82 may be made of other materials. If the printed layer 82 is made of other materials, then the light transmittances of the low-permeability region 92 and the medium-permeability region 94 may be adjusted by changing a distribution of dots of a light-impermeable material that completely blocks light, or by changing a distribution of densities of a semipermeable material that transmits light at a reduced intensity level. The low-permeability region 92 and the medium-permeability region 94 may be formed in ways other than printing. For example, the low-permeability region 92 and the medium-permeability region 94 may be formed by discoloring a layer with an applied laser beam.

According to the present embodiment, the printed sheet 50 is included as a single printed sheet, or the printed layer 82 is included as a single printed layer. However, as long as the blurred region 104 is formed, a plurality of printed sheets 50 or a plurality of printed layers 82 may be included in different positions or in one position. For example, printed sheets 50 or printed layers 82 may be applied respectively to the exit of the light source unit 48 from which the image light 202 leaves and the light-transmissive cover 30.

### [2-3. Other Features]

In the above embodiment, the concave mirror 28 is moved angularly by the step motor 64. However, as long as the printed sheet 50 is disposed between the windshield 16 (combiner) and the light source 22, the concave mirror 28 may be fixed in position.

A head-up display device (12) includes a housing (18), an image light emitter (48) disposed in the housing (18) for emitting image light (202) representing an image, and a mirror (28) disposed in the housing (18) for reflecting the image light (202) in order to display the image light (202) as a virtual image (300) in a front visual field of the user (150) outside of the housing (18). A light-transmissive layer (50) is disposed in the housing (18) on a light path (200) of the image light (202). The light-transmissive layer (50) has a light transmittance that is progressively higher toward a center region thereof.

## Claims

1. A head-up display device (12) comprising:
a housing (18);
an image light emitter (48) disposed in the housing (18), for emitting image light (202) representing an image;
a mirror (28) disposed in the housing (18), for reflecting the image light (202) to display the image light (202) as a virtual image (300) in a front visual field of a user (150) outside of the housing (18); and
a light-transmissive layer (50) disposed on a light path (200) of the image light (202) in the housing (18),
wherein the light-transmissive layer (50) has a light transmittance that is progressively higher toward a center region thereof.

2. The head-up display device (12) according to claim 1, wherein the mirror (28) comprises a concave mirror (28), which is movable angularly with respect to the light path (200); and
the light-transmissive layer (50) is disposed more closely to the image light emitter (48) than the concave mirror (28).

3. The head-up display device (12) according to claim 1 or 2, wherein the light-transmissive layer (50) is disposed on an exit of the image light emitter (48) from which the image light (202) leaves the image light emitter (48), or is disposed in the image light emitter (48).

4. The head-up display device (12) according to any one of claims 1 to 3, wherein the light-transmissive layer (50) is disposed on the mirror (28).

5. The head-up display device (12) according to any one of claims 1 to 4, further comprising:
a light-transmissive cover (30) disposed on an exit of the housing (18) from which the image light (202) is emitted outside of the housing (18),
wherein the light-transmissive layer (50) includes a printed layer (82) disposed on the light-transmissive cover (30).
